# FASCICULE DE BREVET EUROPEEN

(11) **EP 3 963 202 B1**
(45) Date de publication et mention de la délivrance du brevet: **01.04.2026**
(21) Numéro de dépôt: 20743739.3
(22) Date de dépôt: 28.05.2020
(51) Int. Cl.: F02K 3/075

(54) **STRUCTURE DE CONFLUENCE D'UNE VEINE PRIMAIRE ET D'UNE VEINE SECONDAIRE DANS UNE TURBOMACHINE A DOUBLE FLUX**
KONFLUENZSTRUKTUR EINES PRIMÄRSTROMS UND EINES SEKUNDÄRSTROMS IN EINER BYPASS-GASTURBINE
CONFLUENCE STRUCTURE OF A PRIMARY STREAM AND A SECONDARY STREAM IN A BYPASS TURBINE ENGINE

(30) Priorité: 06.06.2019 FR 1906046
(43) Date de publication de la demande: 09.03.2022
(73) Titulaire: SAFRAN AIRCRAFT ENGINES, 75015 Paris (FR)
(72) Inventeur: LE PANNERER, Brice Marie Yves Emile, 77550 MOISSY-CRAMAYEL (FR); CABRE, Jean-François, 77550 MOISSY-CRAMAYEL (FR); CURLIER, Nicolas Camille Claude, 77550 MOISSY-CRAMAYEL (FR); PFLIEGER, Lucas Arthur, 77550 MOISSY-CRAMAYEL (FR)
(74) Mandataire: Santarelli
(86) Numéro de dépôt international: PCT/FR2020/050897
(87) Numéro de publication internationale: WO 2020/245525

(56) Documents cités:
- FR-A1- 2 296 769
- FR-A1- 2 399 547
- US-A- 4 072 008

## Description

Le sujet de l'invention est une structure de confluence d'une veine primaire et d'une veine secondaire, dans une turbomachine à double flux.

La recherche d'un optimum de cycle thermodynamique est un problème constant pour les turbomachines, notamment les moteurs d'aéronefs, et dont la solution varie selon le régime de vol considéré. On cherche traditionnellement à réaliser un compromis entre les exigences des différents régimes de vol en concevant la turbomachine. Il faut aussi souligner que les inévitables marges d'incertitude entre les conditions théoriques et les conditions réelles de fonctionnement de la machine peuvent encore éloigner, pour chaque régime de vol, le fonctionnement réel du fonctionnement optimal.

Dans le cas particulier des moteurs à double flux comprenant une confluence des veines primaire et secondaire vers l'aval de l'écoulement, un paramètre intervenant dans les caractéristiques du cycle est le taux de dilution du moteur, qu'on peut définir comme le rapport de débit du flux secondaire sur le débit du flux primaire en aval du compresseur basse pression ; or ce taux dépend notamment des conditions de la confluence des deux veines en aval de la turbine basse pression, et en particulier de leurs sections à cet endroit, qui régit les pressions locales des gaz des deux flux et se répercute sur les débits d'admission d'air à l'entrée des veines. La confluence s'effectue à un bord de fuite (extrémité aval) d'une virole circulaire, appelée tôle de confluence, qui sépare la veine primaire de la veine secondaire en aval de la turbine basse pression, et les veines se joignent juste après. Le taux de dilution dépend donc de la forme de cette tôle de confluence et de sa position par rapport à d'autres viroles concentriques, qui définissent les sections des veines à l'endroit de la confluence.

L'objet de l'invention est de pouvoir régler le taux de dilution de la turbomachine selon les besoins, éventuellement pendant le vol. Le moyen fondamental utilisé est la possibilité de faire varier la position de l'extrémité de la tôle de confluence dans la direction axiale de la turbomachine, au moyen d'un mécanisme de réglage d'une partie de la tôle de confluence qui est rendue mobile par rapport aux autres constituants de la structure environnante.

Les documents US 4072008 A, FR 2399547 A1 et FR 2296769 A1 décrivent divers agencements où le taux de dilution ou la pression à la confluence de deux veines d'une turbomachine peut être réglé en modifiant les conditions de confluence, par exemple la section d'ouverture d'une des veines.

US 4 072 008 A décrit plus précisément un agencement comprenant, en sus d'une tôle de confluence fixe, une structure mobile coulissant au-delà de la tôle de confluence vers l'aval, composée d'une pluralité de conduits et apte à modifier le taux de dilution des gaz en obturant à volonté une portion de la veine secondaire en aval de la confluence.

Et FR 2 399 547 A1 décrit plus précisément un agencement situé près de l'entrée d'une turbomachine, à une séparation entre la veine primaire et une veine secondaire plutôt qu'à la confluence en aval des turbines. Ce dispositif assez compliqué comprend deux tôles coulissantes, et un conduit de dérivation de la veine secondaire doit être ajouté.

Sous une forme générale, l'invention concerne ainsi une structure de confluence d'une veine primaire et d'une veine secondaire selon la revendication 1.

La disposition de la deuxieme pièce de révolution permettra de faire varier, d'après la configuration de la structure environnante, la géométrie d'entrée du canal extérieur annulaire et la part du débit de la veine secondaire qui y entre, et surtout la part complémentaire, qui participe à la dilution des gaz de la veine primaire.

Cet effet est particulièrement sensible si le carter comprend un ressaut saillant radialement vers l'intérieur dans la veine secondaire, et la partie mobile de la virole est mobile dans des positions où l'extrémité amont est en amont du ressaut, et dans des positions où l'extrémité amont est en aval du ressaut, puisque la section d'entrée du canal extérieur annulaire varie alors très fortement.

Dans un mode préféré de réalisation, permettant des commandes aisées du mouvement de la tôle de confluence ou de la partie mobile de la virole, l'une au moins de ces parties mobiles est déplacée par des dispositifs de réglage s'étendant hors du carter extérieur : ces dispositifs peuvent alors être commandés par des mécanismes extérieurs à la turbomachine, relativement faciles à concevoir et à disposer.

De tels dispositifs de réglage peuvent consister en des broches pivotantes, en appui radial sur le carter extérieur, munies de cames s'appuyant sur des rebords de la tôle de confluence ou de la virole.

Si cela est nécessaire, les broches pivotantes peuvent traverser des manchons d'une au moins de la partie fixe de la tôle de confluence et de la partie fixe de la virole, en y étant ajustées par des liaisons à rotule.

Une telle disposition garantit une bonne isostaticité du montage des parties fixes concernées, en permettant de maintenir leur concentricité à l'axe de la turbomachine, mais aussi de se dilater librement par le glissement des rotules dans les manchons. Et les rotules sur les broches permettent de minimiser les fuites aux endroits où elles traversent des viroles.

La concentricité de la partie mobile par rapport à la partie fixe, pour au moins l'une de la tôle de confluence et de la virole, peut quant à elle facilement être maintenue par des ressorts comprimés entre la partie fixe et la partie mobile dans la direction radiale, mais permettant leur glissement, ou par des mécanismes comprenant par exemple des galets, des rouleaux, ou des surfaces lubrifiées. Un ajustement fin sur un centrage long, entre les deux parties fixe et mobile peut néanmoins suffire, avec éventuellement l'ajout d'un lubrifiant solide, un revêtement par exemple.

Dans un mode de réalisation particulièrement préféré, car permettant une transition aisée et sans perte de rendement de l'écoulement entre les différentes positions des parties mobiles, la partie fixe (d'au moins une de la tôle de confluence et de la virole) est reliée à la partie mobile correspondante par au moins une tôle incurvée comprenant une extrémité tangente à la partie fixe, une extrémité tangente à la partie mobile, et une partie intermédiaire incurvée et tangente à chacune des extrémités ; la partie intermédiaire et au moins une des extrémités, qui est glissante soit sur la partie fixe soit sur la partie mobile, étant divisées en secteurs angulaires par des fentes de direction axiale.

Selon une construction importante en pratique, une au moins de la partie mobile de la tôle de confluence et de la partie mobile de la virole est traversée par des éléments d'extension radiale de la structure, à des perçages oblongs pouvant être couverts par des joints d'étanchéité. De tels éléments radiaux peuvent comprendre des crayons d'alimentation en carburant de post-combustion.

Les différents aspects, caractéristiques et avantages de l'invention seront maintenant décrits plus en détail au moyen des figures suivantes, qui en illustrent certains modes de réalisation préférés, donnés à titre purement illustratif :
Figure 1 est une vue générale d'une turbomachine à double flux ;
Figure 2 est un agrandissement de la zone de confluence ;
Figure 3 illustre les caractéristiques de structure de l'invention dans la zone de confluence
Figure 4 est une autre vue, en perspective, de la zone de confluence ;
Figure 5 représente une liaison entre une partie fixe et une partie mobile de la structure ;
Figure 6 représente un moyen de centrage entre une partie fixe et une partie mobile ;
Figure 7 représente un premier état du dispositif ;
Figure 8 un deuxième état ;
Figure 9 un troisième état ;
Figure 10 illustre un autre mode de réalisation, plus général, de l'invention.

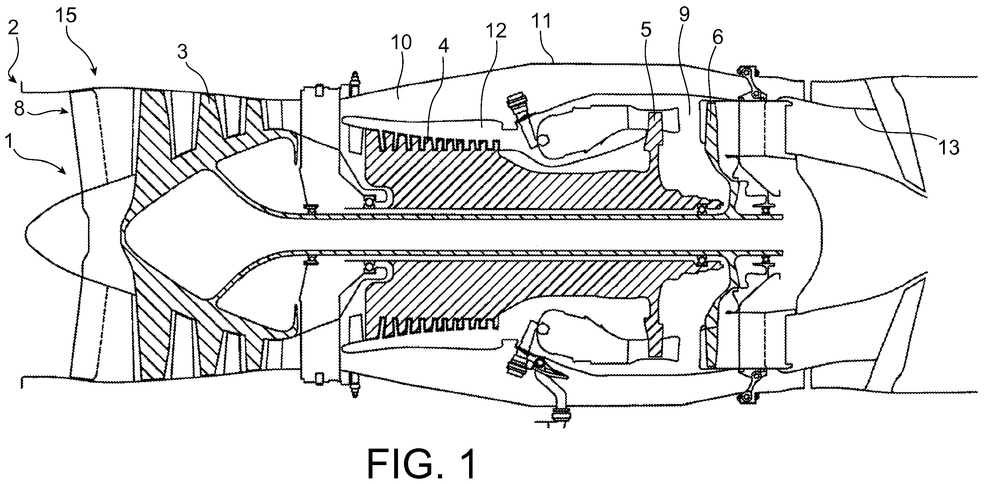

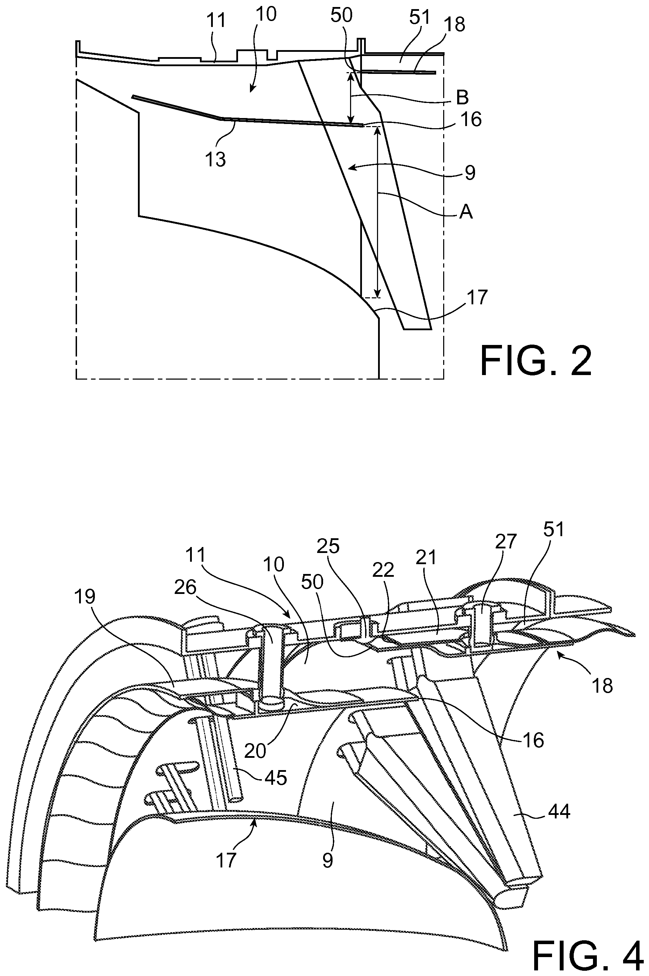

Les figures 1 et 2 représentent un turboréacteur qui comprend classiquement un rotor 1, tournant autour d'un axe X central, et un stator 2 disposé autour du rotor 1. Le rotor 1 et le stator 2 se partagent les aubes d'un compresseur basse pression 3, d'un compresseur haute pression 4, d'une turbine haute pression 5 et d'une turbine basse pression 6 qui se succèdent le long de l'axe X. L'espace entre le rotor 1 et le stator 2 est occupé par une veine 8, unitaire à l'amont, et qui se divise en une veine primaire 9 et une veine secondaire 10 concentriques en aval du compresseur basse pression 3. La partie unitaire 8 de la veine et la veine secondaire 10 sont entourées par un carter extérieur 11. La veine primaire 9 et la veine secondaire 10 sont séparées l'une de l'autre par un carter intermédiaire 12, dont la partie aval - dans cette description, « amont » et « aval » font référence au sens d'écoulement des gaz par rapport à l'axe 1 central - est une tôle de confluence 13. Les aubes du compresseur haute pression 4 et des turbines 5 et 6 sont présentes dans la veine primaire 9, ainsi qu'une chambre de combustion 14. Et le turboréacteur peut comprendre une soufflante 15 en amont du compresseur basse pression 3, dont les aubes s'étendent dans la portion unitaire 8 de la veine.

La figure 2 montre que la tôle de confluence 13 est la seule structure séparant les veines 9 et 10 en aval, et qu'elle sert donc aussi à les délimiter. Les veines 9 et 10 se joignent en aval d'une extrémité aval, ou bord de fuite 16 de la tôle de confluence 13. La veine primaire 9 est encore délimitée à son bord radialement intérieur par un cône 17 du rotor 1, s'amenuisant vers l'aval ; la veine secondaire 10 est délimitée à son bord radialement extérieur par le carter extérieur 11, appelé ici carter de diffusion ; une autre pièce de révolution intérieure au carter extérieur 11, appelée chemise 56, s'étend toutefois devant la section de la veine secondaire 10 en aval d'un bec 50 (extrémité amont) : elle délimite un canal extérieur annulaire ou canal sous chemise 51, qui intercepte une portion de débit de la veine secondaire 10 et la soustrait à la confluence et à la dilution des gaz de la veine primaire 9. L'air traversant le canal sous chemise 51 sert à protéger le carter extérieur 11 de la chaleur des gaz de combustion en aval de la confluence. Le bec 50 s'étend ici, en amont du bord de fuite 16. Le taux de dilution et la poussée de la turbomachine dépendent alors notamment du rapport des sections de la veine primaire 9 et de la veine secondaire 10 à l'endroit de la confluence, qui est fonction des différences de rayons A et B entre le cône 17 et la tôle de confluence 13 d'une part, la tôle de confluence 13 et la chemise 56 d'autre part, qui déterminent les pressions des gaz dans les veines et le débit passant dans le canal sous chemise 51.

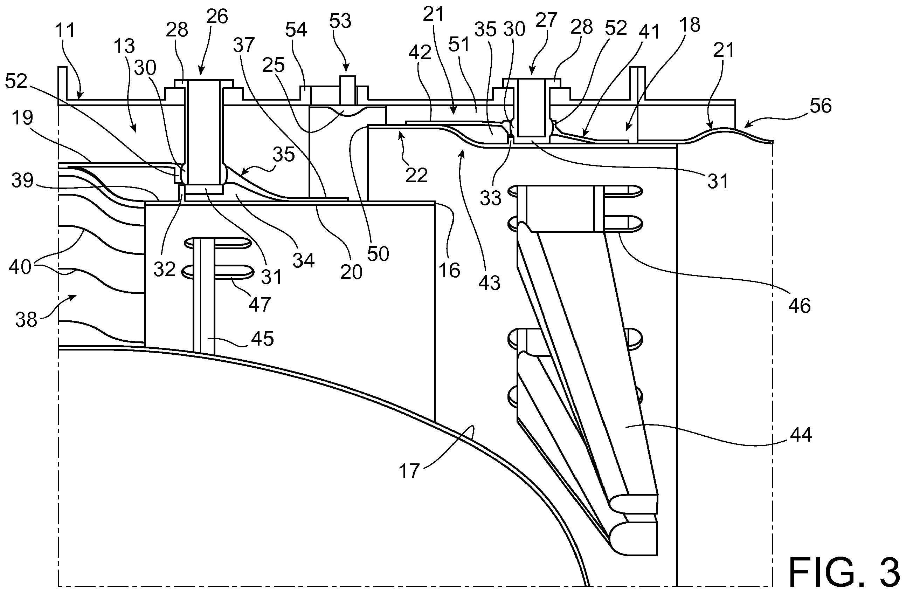

Les dispositions plus particulièrement originales de l'invention seront maintenant décrites en liaison aux figures 3 et 4. La tôle de confluence 13 se compose d'une partie fixe 19 et d'une partie mobile 20, coulissant par rapport à la partie fixe 19 en direction de l'axe X, et qui la prolonge vers l'aval et comprend le bord de fuite 16. La partie fixe 19 et la partie mobile 20 de la tôle de confluence 13 sont toutes deux des tôles continues. La partie mobile 20 est au moins partiellement cylindrique. Elle est plus précisément cylindrique aux endroits où elle couvre on peut couvrir la partie fixe 19 en glissant sur elle ; elle peut avoir une forme différente, conique par exemple, plus en aval, dans les portions adjacentes au bord de fuite 16. La chemise 56 est prolongée vers l'amont par une virole 18 construite d'une façon analogue, avec une partie fixe 21 et une partie mobile 22, coulissant par rapport à la précédente dans la direction de l'axe X, mais qui la prolonge vers l'amont et comprend le bec 50. Quand cette disposition de partie mobile de la virole 18 est adoptée, la carter extérieur 11 porte avantageusement un ressaut 25 à sa face intérieure, un peu en amont du bord de fuite 16, et qui correspond à un léger étranglement de la section de la veine secondaire 10.

Des broches 26 et 27 permettent de déplacer respectivement la partie mobile 20 de la tôle de confluence 13, et la partie mobile 22 de la virole 18, par rapport aux parties fixes 19 et 21 correspondantes. Ces broches 26 et 27 traversent le carter extérieur 11 et comprennent chacune une extrémité extérieure 28, en appui sur un bossage 29 du carter extérieur 11, une rotule 30 saillant autour d'elles à l'endroit où les broches 26 et 27 traversent les parties fixes 19 et 21, et une came 31 à leur extrémité intérieure, qui s'appuie sur des rebords circulaires 32 ou 33 des parties mobiles 20 et 22. Les cames 31 sont circulaires et excentrées par rapport à l'axe des broches 26 et 27, ce qui permet de repousser les rebords 32 et 33, et donc les parties mobiles 20 et 22, dans la direction axiale quand les broches 26 et 27 sont tournées. Le mécanisme de commande des broches 26 et 27 n'est pas représenté en détail, mais il n'est pas critique pour la mise en œuvre de l'invention et peut consister en des dispositifs connus à anneau de commande entourant le carter extérieur 11 et à bielles, dont chacune est articulée à l'anneau de commande et à une broche 26 ou 27 respective : en faisant tourner l'anneau autour du carter extérieur 11 par un moteur, l'inclinaison des bielles dans la direction angulaire du carter extérieur 11 varie, et les broches 26 et 27 pivotent. De tels mécanismes sont courants dans l'art pour l'application ressemblante de modifier le calage angulaire de certains étages d'aubes fixes dotées de pivots traversant le carter extérieur. D'autres mécanismes pourraient aussi être proposés : à câble, à pignon et crémaillère, à actionneur par exemple. On préférera pouvoir commander les mécanismes en vol pour ajuster à tout instant les conditions de confluence, mais l'invention engloberait aussi des mécanismes réglables seulement au sol. En variante, on pourrait utiliser des assemblages de broches fixes, porteuses des rotules 30, et de broches tournant dans les précédents et porteurs des cames 31.

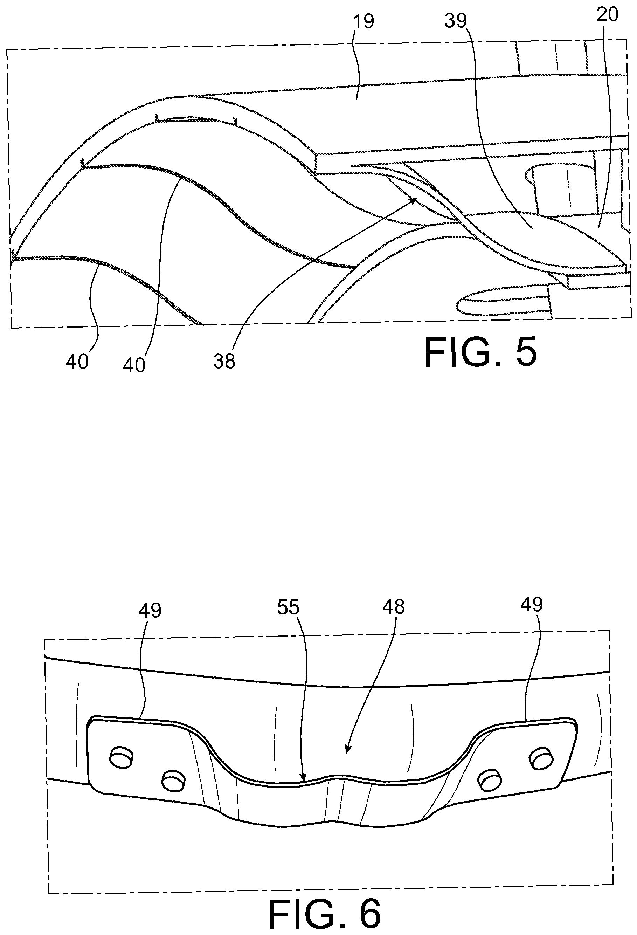

Les broches 26 et 27 sont réparties autour du turboréacteur en deux groupes circulaires. Elles contribuent à maintenir la concentricité des parties fixes 19 et 21 avec l'axe du moteur. Elles permettent toutefois leur dilatation thermique, grâce au glissement offert par l'ajustement des rotules 30 dans des manchons 52 rayonnants des parties fixes 19 et 21. Les parties fixes 19 et 21 et les parties mobiles 20 et 22 présentent des régions de recouvrement avec des jeux importants qui constituent des logements 34 et 35 annulaires, où sont logées les extrémités des broches 26 et 27, les cames 31 et les bordures 32 et 33. Les logements 34 et 35 sont limités par des portions ondulées de raccordement des parties fixes 19 et 21 aux parties mobiles 20 et 22. Ces portions comprennent, pour la tôle de confluence 13, une portion extérieure 36 appartenant à la partie fixe 19, traversée par les broches 26 et qui finit en aval sur une extrémité 37 cylindrique et ajustée autour de la partie mobile 20 avec peu de jeu ; et une portion intérieure 38 fixée à la partie fixe 19 à une extrémité amont et dont une extrémité aval 39 est cylindrique et glisse sur la partie mobile 20 en amont des broches 26 ; cette portion intérieure 38 peut consister, comme le représente la figure 5, en une tôle pourvue de fentes longitudinales 40 qui la divisent en pétales, à l'extrémité aval 39 et la région incurvée intermédiaire aux extrémités, lui donnant une souplesse suffisante pour qu'elle frotte sans effort important sur la partie mobile 20 et maintienne une bonne étanchéité de la veine primaire 9 au raccordement entre les parties fixes et mobiles 19 et 20. La partie fixe 21 de la virole 18 comporte aussi une portion extérieure 41 ondulée, traversée par les broches 27 et finissant en amont sur une extrémité 42 cylindrique, ajustée avec peu de jeu autour de la partie mobile 23 ; et une portion intérieure 43 est façonnée sur la partie mobile 22. Ces portions 36, 38, 41 et 43 comprennent donc en général deux extrémités cylindriques, et une région ondulée ou incurvée raccordant les extrémités sans variation brusque de pente, pour préserver une bonne qualité de l'écoulement dans la veine primaire 9 (pour la portion intérieure 38), la veine secondaire 10 (pour la portion extérieur 36 et la portion intérieure 43), ou le canal sous chemise 51 (pour la portion extérieure 41).

Des éléments de structure radiaux peuvent s'étendre à travers la tôle de confluence 13 ou la virole 18. C'est le cas ici de bras accroche-flammes 44, qui traversent la virole 18, et de crayons 45 de post-combustion qui traversent la tôle de confluence 13. Si ces bras accroche-flammes 44 ou ces crayons 45 doivent traverser la partie mobile 20 ou 22, on munit cette dernière de perçages oblongs 46 ou 47 s'allongeant dans la direction axiale X pour lui permettre de coulisser. Ces perçages oblongs 46 ou 47 peuvent être couverts par des joints d'étanchéité coulissants ou déformables pour couvrir leur ouverture et ne pas tolérer de fuites.

La concentricité des parties mobiles 20 ou 22 dans les parties fixes 19 ou 21 peut être assurée par des ressorts tels que des pontets 48 (figure 6) de forme arquée, ayant des extrémités 49 fixées à l'une des parties et une portion médiane 55 incurvée en appui sur l'autre partie. De tels pontets 48 peuvent être montés notamment aux extrémités 37 et 42 des parties fixes 19 et 21, tangents aux parties mobiles 20 et 22 et distantes d'elles de peu de jeu, leurs portions médianes 55 glissant alors sur les parties mobiles 20 et 22, cylindriques à cet endroit. La concentricité pourrait aussi être assurée par des galets ou rouleaux, des revêtements de lubrifiant solide ou des couches antiusure.

Le ressaut 25 annulaire peut lui-même être monté de façon coulissante dans le carter extérieur 11, en le pourvoyant de broches 53 traversant le carter extérieur 11, ce qui permettra de les saisir par un mécanisme de commande, et mobiles dans des perçages oblongs 54 creusés aussi à travers le carter extérieur 11 et s'allongeant dans la direction de l'axe X. Cette disposition permet de faire varier plus fortement la section d'ouverture et la facilité d'accès au canal sous chemise 51 qu'avec la portion mobile 22 seule de la virole 18.

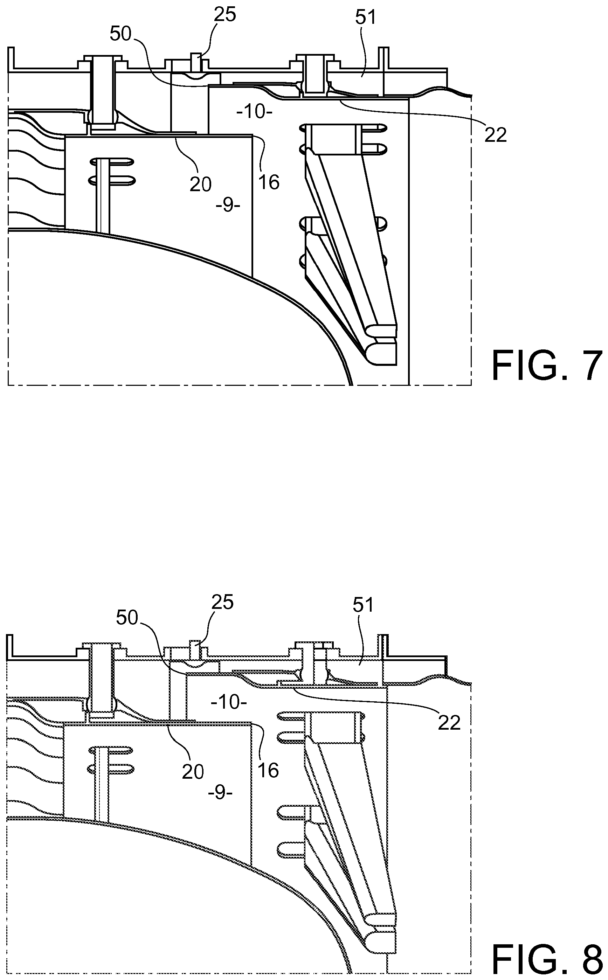

Les autres figures 7, 8 et 9 illustrent les étapes que peuvent prendre le dispositif. Les parties mobiles 20 et 22 et le ressaut 25 peuvent être tous déplacés indépendamment, et le dispositif peut comprendre d'ailleurs seulement la partie mobile 20 équipant la tôle de confluence 13. En déplaçant cette partie mobile 20, autour du cône 17, il est possible de faire varier la section de la veine primaire 9 à l'endroit de la confluence. Et en déplaçant la partie mobile 22 de la virole 18 et éventuellement le ressaut 25, il est possible de placer la partie mobile 22 devant le ressaut 25 ou de l'éloigner de lui, de manière à contrarier ou au contraire favoriser le passage de l'air dans le canal sous chemise 51 et donc de faire varier le débit d'air de la veine secondaire 10 qui participe à la dilution en atteignant la confluence, même si les parties mobiles 20 et 22 sont toutes deux cylindriques.

Mais le mouvement de la partie mobile 22 de la virole 18 agit surtout sur la confluence, indépendamment du canal sous chemise 51, en modifiant la position du bord de fuite 16 par rapport à la portion intérieure 43 incurvée de la partie mobile 22 de la virole 18, c'est-à-dire la section de sortie de la veine secondaire 10 à la confluence quand la partie incurvée 43 coulisse autour du bord de fuite 16.

On peut donc agir sur les sections des veines primaires 9 et secondaire 10 à la confluence, et du canal sous chemise 51 à son entrée, donc sur les pressions des gaz à la confluence, le débit de la veine secondaire 10 à la confluence, et la température des gaz. Cela implique qu'on peut régler la poussée du moteur - qui dépend surtout de la température des gaz - et la consommation de carburant - qui dépend beaucoup du taux d'extraction, c'est-à-dire du rapport de pression des veines. L'invention n'implique pas que la post-combustion soit présente. Le ressaut 25 est facultatif, et la chemise 56 peut être complètement fixe, ou même absente, en acceptant de bénéficier des avantages de l'invention à un moindre degré.

La figure 7 illustre ainsi un état où la partie mobile 20 de la tôle de confluence 13, la partie mobile 22 de la virole 18 et le ressaut 25 sont repoussés vers l'aval. La portion intérieure 43 incurvée est en aval du bord de fuite 16, et le canal sous chemise 51 est modérément ouvert. Les sections des veines primaire 9 et secondaire 10 sont importantes à la confluence, et le débit passant par le canal sous chemise 51 est modéré.

La figure 8 diffère de la figure 7 en ce que la partie mobile 22 de la virole 18 est repoussée vers l'amont. Cela permet d'obstruer beaucoup plus fortement le canal sous chemise 51, ce qui augmente le débit de la veine secondaire 10 qui participe à la dilution. Et la partie incurvée est alors en amont du bord de fuite 16, ce qui diminue la section de la veine secondaire 10.

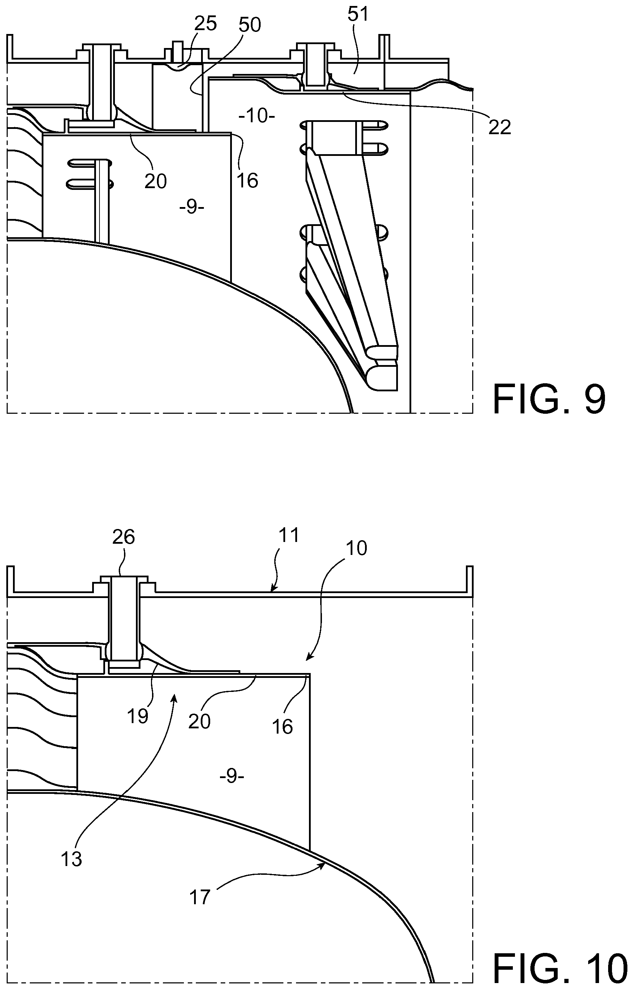

La figure 9 illustre un état où la partie mobile 20 de la tôle de confluence 13 est repoussée vers l'amont, et la partie mobile 22 de la virole 18 est repoussée vers l'aval, et le ressaut 25 vers l'amont, ce qui diminue la section de la veine primaire 9 et ouvre autant que possible le canal sous chemise 51, en réduisant donc le débit de la veine secondaire 10 qui participe à la dilution, la portion intérieure 43 incurvée étant alors en aval du bord de fuite 16. Les états des figures 8 et 9 sont donc des états opposés de la dilution.

Des états intermédiaires peuvent aussi être envisagés.

La figure 10 illustre une autre réalisation importante de l'invention, conforme à des remarques précédentes : les crayons 45 de post-combustion, les bras accroche-flamme 44, la chemise 56 et le ressaut 25 sont absents, ainsi que les moyens de commande de position de ce dernier et de la partie mobile 22 de la virole 18. Le reste du dispositif est inchangé, si ce n'est que le carter extérieur 11 est lisse et continu en aval des broches 26 et que la tôle de confluence 13 est dépourvue des perçages oblongs 47. La commande de la dilution se fait seulement par les broches 26, pour modifier la section de la veine primaire 9 à la confluence, la section de la veine secondaire 10 étant inchangée avec un carter extérieur 19 cylindrique. Les caractéristiques avantageuses de l'invention, exposées à propos des figures précédentes, se retrouvent dans cette réalisation de l'invention, qui a d'ailleurs une importance au moins aussi grande que la précédente puisqu'elle correspond à la situation plus générale et plus fréquente où la post-combustion n'est pas requise.

## Revendications

1. Structure de confluence d'une veine primaire et d'une veine secondaire, entourant la veine primaire, d'un moteur d'aéronef, une tôle de confluence (13) séparant la veine primaire (9) et la veine secondaire (10) en aval d'une turbine basse pression du moteur, la tôle ayant une forme de révolution et une extrémité aval (16), d'après un sens d'écoulement de gaz dans la veine primaire et la veine secondaire dans une direction axiale (X) du moteur, la veine primaire contenant des aubes de compresseurs (4) et de turbines (5, 6), ainsi qu'une chambre de combustion (14), la veine secondaire étant limitée extérieurement, dans une direction radiale du moteur, par un carter extérieur (11), la tôle de confluence (13) possédant une partie mobile (20), coulissant de façon réglable dans la direction axiale (X) par rapport à une partie complémentaire (19), fixe par rapport au carter extérieur, de ladite tôle de confluence, la partie mobile (20) comprenant l'extrémité aval (16), la veine primaire (9) et la veine secondaire (10) se joignant seulement en aval de ladite extrémité aval (16), dans laquelle une virole (18) est montée dans le carter extérieur (11) en délimitant un canal extérieur annulaire (51) avec lui, la virole s'étendant notamment en aval de l'extrémité aval (16) de la tôle de confluence (13) et ayant une extrémité amont (50), d'après ledit sens d'écoulement des gaz, **caractérisée en ce que** la virole (18) possède une partie mobile (22), comprenant l'extrémité amont et coulissant de façon réglable dans la direction axiale par rapport à une partie complémentaire (21), fixe par rapport au carter extérieur, de ladite virole (18).

2. Structure de confluence selon la revendication 1, **caractérisée en ce que** le carter extérieur (11) comprend un ressaut (25) saillant radialement vers l'intérieur dans la veine secondaire (10), et la partie mobile de la virole est mobile dans des positions où l'extrémité amont (50) est en amont du ressaut, et dans des positions où l'extrémité amont (50) est en aval du ressaut.

3. Structure de confluence selon l'une quelconque des revendications 1 ou 2, **caractérisée en ce qu'**une au moins de la partie mobile (20) de la tôle de confluence et de la partie mobile (22) de la virole est déplacée par des dispositifs de réglage (26, 27) s'étendant hors du carter extérieur.

4. Structure de confluence selon la revendication 3, **caractérisée en ce que** les dispositifs de réglage sont des broches (26, 27) pivotantes en appui radial sur le carter extérieur et munies de cames (31) s'appuyant sur des rebords (32) des parties mobiles (20, 22).

5. Structure de confluence selon la revendication 4, **caractérisée en ce que** les broches pivotantes traversent des manchons (52) d'une au moins de la partie fixe (19) de la tôle de confluence et de la partie fixe (21) de la virole, en y étant centrées par des rotules (30) saillant autour des broches.

6. Structure de confluence selon l'une quelconque des revendications 1 à 5, **caractérisée en ce que** la partie mobile est reliée à la partie fixe, pour au moins l'une de la tôle de confluence et de la virole, par des ressorts (48) comprimés dans la direction radiale.

7. Structure de confluence selon l'une quelconque des revendications 1 à 6, **caractérisée en ce que** au moins une des parties fixes et mobiles comprend une portion incurvée de variation de rayon sans variation brusque de pente.

8. Structure de confluence selon les revendications 1 et 7, **caractérisée en ce qu'**une dite portion incurvée (43) appartient à la virole (18), et l'extrémité aval (16) est mobile devant la partie incurvée et entourée par la partie incurvée.

9. Structure de confluence selon la revendication 8, **caractérisée en ce que** la portion incurvée (43) appartient à la partie mobile (22) de la virole (18).

10. Structure de confluence selon la revendication 7, **caractérisée en ce qu'**une dite portion incurvée relie la partie fixe (19) à la partie mobile (20) de la tôle de confluence (13), est solidaire de l'une desdites parties et se raccorde à l'autre desdites parties par une portion cylindrique glissant sur ladite autre partie, la portion incurvée et la portion cylindrique étant divisées en secteurs angulaires par des fentes s'allongeant dans la direction de l'axe (X).

11. Structure de confluence selon la revendication 2, **caractérisée en ce que** le ressaut est mobile dans le carter extérieur (11) dans la direction de l'axe (X), grâce à un mécanisme de réglage (53, 54) comprenant des broches (53) traversant le carter extérieur et coulissant dans des fentes (54) traversant aussi le carter extérieur.

12. Structure de confluence selon l'une quelconque des revendications 1 à 11, **caractérisée en ce qu'**au moins une de la partie mobile (20, 22) de la tôle de confluence et de la partie mobile de la virole est traversée par des éléments (44, 45) d'extension radiale de la structure, à travers des perçages oblongs (46, 47) couverts de joints d'étanchéité.

13. Structure de confluence selon la revendication 2, **caractérisée en ce que** lesdits éléments comprennent des crayons (45) d'alimentation en carburant de post-combustion ou des bras accroche-flamme (44).

14. Structure de confluence selon l'une quelconque des revendications précédentes, **caractérisée en ce que** la partie mobile (20) de la tôle de confluence est cylindrique au moins à une portion de recouvrement de la partie complémentaire (19).

15. Turbomachine à double flux équipée de la structure de confluence selon l'une quelconque des revendications précédentes.

## Patentansprüche

1. Konfluenzstruktur einer Primärströmung und einer Sekundärströmung, die die Primärströmung umgibt, eines Flugzeugtriebwerks, wobei ein Konfluenzblech (13) die Primärströmung (9) und die Sekundärströmung (10) nachgelagert einer Niederdruckturbine des Triebwerks trennt, wobei das Blech eine Rotationsform und ein nachgelagert gelegenes Ende (16) aufweist, entsprechend einer Gasströmungsrichtung in der Primärströmung und in der Sekundärströmung in einer axialen Richtung (X) des Triebwerks, wobei die Primärströmung Kompressorschaufeln (4) und Turbinenschaufeln (5, 6) sowie eine Brennkammer (14) enthält, wobei die Sekundärströmung in radialer Richtung des Motors außen durch ein Außengehäuse (11) begrenzt ist, wobei das Konfluenzblech (13) einen beweglichen Teil (20) aufweist, der in axialer Richtung (X) relativ zu einem komplementären Teil (19) des Konfluenzblechs, das relativ zum Außengehäuse feststehend ist, einstellbar verschiebbar ist, wobei der bewegliche Teil (20) das nachgelagerte Ende (16) umfasst, wobei die Primärströmung (9) und die Sekundärströmung (10) sich erst nachgelagert des nachgelagerten Endes (16) verbinden, wobei ein Ring (18) in das Außengehäuse (11) eingebaut ist und mit diesem einen ringförmigen Außenkanal (51) begrenzt, wobei sich der Ring insbesondere nachgelagert von dem nachgelagerten Ende (16) des Konfluenzblechs (13) erstreckt und ein vorgelagertes Ende (50) aufweist, gemäß der Strömungsrichtung der Gase, **dadurch gekennzeichnet, dass** der Ring (18) einen beweglichen Teil (22) aufweist, der das vorgelagerte Ende umfasst und in axialer Richtung relativ zu einem komplementären Teil (21) des Rings (18), der in Bezug auf das Außengehäuse feststehend ist, einstellbar verschiebbar ist.

2. Konfluenzstruktur nach Anspruch 1, **dadurch gekennzeichnet, dass** das Außengehäuse (11) einen radial nach innen in die Sekundärströmung (10) vorstehenden Vorsprung (25) aufweist und der bewegliche Teil des Rings in Positionen beweglich ist, in denen sich das vorgelagerte Ende (50) vorgelagert des Vorsprungs befindet, und in Positionen, in denen sich das vorgelagerte Ende (50) nachgelagert des Vorsprungs befindet.

3. Konfluenzstruktur nach einem der Ansprüche 1 oder 2, **dadurch gekennzeichnet, dass** mindestens einer des beweglichen Teils (20) des Konfluenzblechs und des beweglichen Teils (22) des Rings durch Einstellvorrichtungen (26, 27), die sich aus dem Außengehäuse erstrecken, bewegt wird.

4. Konfluenzstruktur nach Anspruch 3, **dadurch gekennzeichnet, dass** die Einstellvorrichtungen Stifte (26, 27) sind, die radial am Außengehäuse schwenkbar aufliegen und mit Nocken (31) versehen sind, die sich auf Kanten (32) der beweglichen Teile (20, 22) stützen.

5. Konfluenzstruktur nach Anspruch 4, **dadurch gekennzeichnet, dass** die Schwenkstifte Muffen (52) mindestens eines feststehenden Teils (19) des Konfluenzblechs und des feststehenden Teils (21) des Rings durchlaufen, wobei sie dort durch Kugelgelenke (30) zentriert sind, die um die Stifte herum vorstehen.

6. Konfluenzstruktur nach einem der Ansprüche 1 bis 5, **dadurch gekennzeichnet, dass** der bewegliche Teil mit dem feststehenden Teil, für mindestens eines des Konfluenzblechs und des Rings, durch in radialer Richtung zusammengedrückte Federn (48) verbunden ist.

7. Konfluenzstruktur nach einem der Ansprüche 1 bis 6, **dadurch gekennzeichnet, dass** mindestens einer des feststehenden und des beweglichen Teils einen gebogenen Radiusvariationsabschnitt ohne plötzliche Neigungsänderung umfasst.

8. Konfluenzstruktur nach den Ansprüchen 1 und 7, **dadurch gekennzeichnet, dass** ein gebogener Abschnitt (43) zu dem Ring (18) gehört und das nachgelagerte Ende (16) vor dem gebogenen Abschnitt beweglich ist und von dem gebogenen Abschnitt umgeben ist.

9. Konfluenzstruktur nach Anspruch 8, **dadurch gekennzeichnet, dass** der gebogene Abschnitt (43) zu dem beweglichen Teil (22) des Rings (18) gehört.

10. Konfluenzstruktur nach Anspruch 7, **dadurch gekennzeichnet, dass** ein gebogener Abschnitt den feststehenden Teil (19) mit dem beweglichen Teil (20) des Konfluenzblechs (13) verbindet, mit einem der Teile fest verbunden ist und mit dem anderen der Teile durch einen zylindrischen Abschnitt verbunden ist, der auf dem anderen Teil gleitet, wobei der gebogene Abschnitt und der zylindrische Abschnitt durch Schlitze, die sich in Richtung der Achse (X) erstrecken, in Winkelsektoren unterteilt sind.

11. Konfluenzstruktur nach Anspruch 2, **dadurch gekennzeichnet, dass** der Vorsprung in dem Außengehäuse (11) in Richtung der Achse (X) durch einen Einstellmechanismus (53, 54) beweglich ist, der Stifte (53) umfasst, die durch das Außengehäuse durchlaufen und in Schlitzen (54) gleiten, die auch durch das Außengehäuse durchlaufen.

12. Konfluenzstruktur nach einem der Ansprüche 1 bis 11, **dadurch gekennzeichnet, dass** mindestens einer des beweglichen Teils (20, 22) des Konfluenzblechs und des beweglichen Teils des Rings von radial ausdehnenden Elementen (44, 45) der Struktur durch mit Dichtungsfugen bedeckte Langlöcher (46, 47) durchlaufen wird.

13. Konfluenzstruktur nach Anspruch 2, **dadurch gekennzeichnet, dass** die Elemente Brennstäbe (45) zur Versorgung mit Nachverbrennungskraftstoff oder Flammenfängerarme (44) umfassen.

14. Konfluenzstruktur nach einem der vorhergehenden Ansprüche, **dadurch gekennzeichnet, dass** der bewegliche Teil (20) des Konfluenzblechs mindestens an einem Überlappungsabschnitt des komplementären Teils (19) zylindrisch ist.

15. Turbomaschine mit doppeltem Strömungsstrom, die mit der Konfluenzstruktur nach einem der vorhergehenden Ansprüche ausgestattet ist.

## Claims

1. Confluence structure of a primary stream and of a secondary stream, surrounding the primary stream, of an aircraft engine, a confluence plate (13) separating the primary stream (9) and the secondary stream (10) downstream of a low-pressure turbine of the engine, the plate having a shape of revolution and a downstream end (16), according to a direction of gas flow in the primary stream and in the secondary stream in an axial direction (X) of the engine, the primary stream containing compressor blades (4) and turbine blades (5, 6) as well as a combustion chamber (14), the secondary stream being delimited externally, in a radial direction of the engine, by an outer casing (11), the confluence plate (13) having a movable part (20) adjustably slidable in the axial direction (X) relative to a complementary part (19) of the confluence plate which is fixed relative to the outer casing, the movable part (20) including the downstream end (16), the primary stream (9) and the secondary stream (10) joining only downstream of the downstream end (16), a sleeve (18) being mounted in the outer casing (11) and delimiting therewith an annular outer channel (51), the sleeve extending in particular downstream of the downstream end (16) of the confluence plate (13) and having an upstream end (50), according to the gas flow direction, **characterized in that** the sleeve (18) has a movable part (22) including the upstream end and adjustably slidable in the axial direction relative to a complementary part (21) of the sleeve (18) which is fixed relative to the outer casing.

2. Confluence structure according to claim 1, **characterized in that** the outer casing (11) includes a shoulder (25) projecting radially inward into the secondary stream (10), and the movable part of the sleeve is movable into positions in which the upstream end (50) is upstream of the shoulder, and into positions in which the upstream end (50) is downstream of the shoulder.

3. Confluence structure according to any one of claims 1 or 2, **characterized in that** at least one of the movable part (20) of the confluence plate and the movable part (22) of the sleeve is displaced by adjustment devices (26, 27) extending out of the outer casing.

4. Confluence structure according to claim 3, **characterized in that** the adjustment devices are pins (26, 27) pivotably supported radially on the outer casing and provided with cams (31) bearing on edges (32) of the movable parts (20, 22).

5. Confluence structure according to claim 4, **characterized in that** the pivoting pins pass through liners (52) of at least one fixed part (19) of the confluence plate and of the fixed part (21) of the sleeve, while being centered therein by ball joints (30) projecting around the pins.

6. Confluence structure according to any one of claims 1 to 5, **characterized in that**, for at least one of the confluence plate and the sleeve, the movable part is connected to the fixed part by springs (48) compressed in the radial direction.

7. Confluence structure according to any one of claims 1 to 6, **characterized in that** at least one of the fixed part and the movable part includes a curved radius-variation portion without abrupt slope variation.

8. Confluence structure according to claims 1 and 7, **characterized in that** a curved portion (43) belongs to the sleeve (18) and the downstream end (16) is movable in front of the curved portion and is surrounded by the curved portion.

9. Confluence structure according to claim 8, **characterized in that** the curved portion (43) belongs to the movable part (22) of the sleeve (18).

10. Confluence structure according to claim 7, **characterized in that** a curved portion connects the fixed part (19) to the movable part (20) of the confluence plate (13), being fixedly connected to one of said parts and connected to the other of said parts by a cylindrical portion sliding on said other part, the curved portion and the cylindrical portion being divided into angular sectors by slots extending in the direction of the axis (X).

11. Confluence structure according to claim 2, **characterized in that** the shoulder in the outer casing (11) is movable in the direction of the axis (X) by an adjustment mechanism (53, 54) including pins (53) passing through the outer casing and sliding in slots (54) which also pass through the outer casing.

12. Confluence structure according to any one of claims 1 to 11, **characterized in that** at least one of the movable part (20, 22) of the confluence plate and the movable part of the sleeve is traversed by radially extending elements (44, 45) of the structure through oblong openings (46, 47) covered by sealing joints.

13. Confluence structure according to claim 2, **characterized in that** said elements include afterburner fuel supply pencils (45) or flame-holder arms (44).

14. Confluence structure according to any one of the preceding claims, **characterized in that** the movable part (20) of the confluence plate is cylindrical at least at an overlap portion of the complementary part (19).

15. Bypass turbine engine equipped with the confluence structure according to any one of the preceding claims.
